(19) Europäisches Patentamt
European Patent Office
Office européen des brevets

(11) **EP 4 778 612 A1**

(12) **EUROPEAN PATENT APPLICATION**

(43) Date of publication:
**22.07.2026 Bulletin 2026/30**

(21) Application number: **25152421.1**

(22) Date of filing: **17.01.2025**

(51) International Patent Classification (IPC):
***B01D 39/16*** (2006.01)   ***D06M 23/10*** (2006.01)

(52) Cooperative Patent Classification (CPC):
**B01D 39/1623; D06M 23/105;** B01D 2239/0414;
B01D 2239/0464; B01D 2239/0492; B01D 2239/10;
B01D 2239/1216; B01D 2239/1233

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Sangtech Lab Inc.**
**Taipei (TW)**

(72) Inventors:
• **LIANG, Cheng-Sheng**
**Taipei (TW)**

• **CHUANG, Pei-Chieh**
**Taipei (TW)**
• **CHEN, Yong-Guei**
**Taipei (TW)**
• **LI, Jeng-Kuan**
**Taipei (TW)**
• **HUANG, Hsin Huei**
**Taipei (TW)**

(74) Representative: **Becker, Eberhard et al**
**Becker Kurig & Partner**
**Patentanwälte mbB**
**Bavariastraße 7**
**80336 München (DE)**

(54) **FILTER MATERIAL AND MANUFACTURING METHOD THEREOF**

(57)    Disclosed is a filter material used to remove cells and biomolecules. The filter material includes a polymer nonwoven fabric and a modifier. The modifier is fixed on the polymer nonwoven fabric. The critical wetting surface tension of the filter material is between 45 dynes/cm and 115 dynes/cm. The surface electrical property (Zeta potential) of the filter material is between -50 and +50 mV. There is no chemical solvent residue on the filter material. In addition, a manufacturing method of the above filter material is provided.

FIG. 1

## Description

## BACKGROUND

Technical Field

The disclosure relates to a filter material and a manufacturing method thereof, and in particular to a filter material used to remove cells and biomolecules and a manufacturing method thereof.

Description of Related Art

Filter materials generally used for purification are usually given specific physical properties through chemical surface modification or surface plasma modification. However, the chemical surface modification usually causes the structure of the filter material to be damaged and chemical solvents are likely to remain, which results in poor filtration efficiency and safety concerns. A method of the surface plasma modification usually makes the surface property of the filter material easy to change over time, and as a result, the method has a disadvantage of low stability.

## SUMMARY

The disclosure provides a filter material and a manufacturing method thereof, which has effects of good filtration efficiency, good safety, and high stability.

A filter material of the disclosure may be used to remove cells and biomolecules. The filter material includes a polymer nonwoven fabric and a modifier. The modifier is fixed on the polymer nonwoven fabric. Critical wetting surface tension of the filter material is between 45 dynes/cm and 115 dynes/cm. A surface electrical property (zeta potential) of the filter material is between -50 mV and +50 mV. There is no chemical solvent residue on the filter material.

In an embodiment of the disclosure, the polymer nonwoven fabric includes ethylene vinyl acetate (EVA), polypropylene (PP), ultra-high molecular weight polyethylene (UHMWPE), polyoxymethylene (POM), polybutylene terephthalate (PBT), polyethylene terephthalate (PET), polyamide (PA), polycyclohexylenedimethylene terephthalate (PCT), polyetheretherketone (PEEK) or combinations thereof.

In an embodiment of the disclosure, the modifier is a cationic surfactant, an anionic surfactant, a zwitterionic surfactant or a nonionic surfactant.

In an embodiment of the disclosure, the modifier has a hydrophobic group and a hydrophilic group connected to each other. The hydrophobic group includes a single long chain containing carbon number 10 to 18, two long chains containing carbon number 10 to 18, or three long chains containing carbon number 10 to 18. The hydrophilic group includes a hydrophilic group with a cation, a hydrophilic group with an anion, a hydrophilic group with a zwitterion, or a hydrophilic group without an ion. Hydrophile-lipophile balance of the modifier is 6 to 18.

In an embodiment of the disclosure, the modifier is hexadecyl-trimethylammonium chloride, sodium coco-sulfate, lauramidopropylamine oxide or polyethylene glycol distearate.

In an embodiment of the disclosure, an average pore diameter of the filter material is between $1\mu m$ and $50\mu m$, and a fiber diameter of the filter material is between $1\mu m$ and $10\mu m$.

In an embodiment of the disclosure, a ratio of the average pore diameter to the fiber diameter of the filter material is between 0.1 and 50.

In an embodiment of the disclosure, the filter material is used to remove white blood cells, wherein a white blood cell depletion ratio of the filter material is greater than 99.99%

In an embodiment of the disclosure, the filter material is used to remove albumins, wherein an albumin depletion ratio of the filter material is greater than or equal to 9%.

In an embodiment of the disclosure, a chemical oxygen demand of an extraction solution of the filter material after water extraction is less than 500 ppm.

A manufacturing method of a filter material includes: first, adding a polymer nonwoven fabric, a modifier, and carbon dioxide gas into a container; second, performing a heating reaction on the container and increasing pressure of the container to obtain a supercritical carbon dioxide fluid; next, dissolving the modifier in the supercritical carbon dioxide fluid to fix a dissolved modifier on the polymer nonwoven fabric; and lowering a temperature and the pressure of the container after the heating reaction is over to recycle the supercritical carbon dioxide fluid and obtaining the filter material.

Based on the above, in the filter material and the manufacturing method thereof of an embodiment of the disclosure, since there is no chemical solvent residue on the filter material, the solution filtered by the filter material may not have any concerns about the safety of human health. Since the manufacturing method of the filter material dissolves the modifier by the critical carbon dioxide fluid as a solvent, there are no chemical solvent residue and no concern about the safety of human health in the filter material of this embodiment.

In order to make the above-mentioned features and advantages of the disclosure more obvious and easy to understand, embodiments are given below and described in detail with reference to the accompanying drawings.

## BRIEF DESCRIPTION OF THE DRAWINGS

FIG. 1 shows pore diameter distributions of a polymer nonwoven fabric in different batches.
FIG. 2 shows fiber diameter distributions of a polymer nonwoven fabric.
FIG. 3 shows cell morphology after cells are treated with extraction solutions of filter materials.
FIG. 4 shows cell viability after cells are treated with extraction solutions of filter materials.
FIG. 5 shows filter materials after filtering blood.

## DESCRIPTION OF THE EMBODIMENTS

A filter material of this embodiment is used to remove cells and biomolecules. The cells may be, for example, white blood cells, and the biomolecules may be, for example, albumins, but are not limited thereto. For example, in response to the filter material of this embodiment used to remove the white blood cells, a white blood cell depletion ratio of the filter material may be, for example, greater than 99.99%, and in response to the filter material of this embodiment used to remove albumins, an albumin depletion ratio of the filter material may be, for example, greater than or equal to 9%, but is not limited thereto.

In this embodiment, critical wetting surface tension (CWST) of the filter material may be, for example, between 45 dyn/cm and 115 dyn/cm, and a surface electrical property (zeta potential) of the filter material may be, for example, between -50 mV and +50 mV, but is not limited thereto. In addition, since there is no chemical solvent residue on the filter material, the solution filtered by the filter material may not have any concerns about the safety of human health.

In this embodiment, an average pore diameter of the filter material may be, for example, between $1\mu$m and $50\mu$m, and a fiber diameter (or a fiber width) of the filter material may be, for example, between $1\mu$m and $10\mu$m, but is not limited thereto. In addition, in this embodiment, a ratio of the average pore diameter to the fiber diameter of the filter material may be, for example, between 0.1 and 50, but is not limited thereto.

In this embodiment, a chemical oxygen demand (COD) of the extraction solution of the filter material after water extraction may be, for example, less than 500 ppm, less than 450 ppm, less than 400 ppm, or less than 350 ppm, but is not limited thereto. The COD of the extraction solution of the filter material after water extraction is lower, which means that the filter material may have better safety and less concerns about human health.

The filter material of this embodiment may include a polymer nonwoven fabric and a modifier, where the polymer nonwoven fabric may include semi-crystalline polymer, but is not limited thereto. For example, the polymer nonwoven fabric may include ethylene vinyl acetate (EVA), polypropylene (PP), ultra-high molecular weight polyethylene (UHMWPE), polyoxymethylene (POM), polybutylene terephthalate (PBT), polyethylene terephthalate (PET), polyamide (PA), polycyclohexylenedimethylene terephthalate (PCT), polyetheretherketone (PEEK) or combinations thereof, but is not limited thereto.

In this embodiment, the modifier is fixed on the polymer nonwoven fabric. For example, the modifier may be physically attached to the polymer nonwoven fabric in a physical manner which may include van der Waals force or a hydrogen bond. The modifier has a hydrophobic group and a hydrophilic group connected to each other, and the hydrophile-lipophile balance (HLB) of the modifier may be, for example, 6 to 18, but is not limited thereto. Among them, the hydrophobic group may include a single long chain containing carbon number 10 to 18 (C10-C18), two long chains containing carbon number 10 to 18, or three long chains containing carbon number 10 to 18, but is not limited thereto. The hydrophilic group may include a hydrophilic group with a cation, a hydrophilic group with an anion, a hydrophilic group with a zwitterion, or a hydrophilic group without an ion, but is not limited thereto. Specifically, the modifier may be, for example, a cationic surfactant, an anionic surfactant, a zwitterionic surfactant or a nonionic surfactant, but is not limited thereto. For example, the cationic surfactant used as the modifier may be hexadecyl-trimethylammonium chloride or distearyl dimethyl ammonium chloride; the anionic surfactant used as the modifier may be sodium coco-sulfate, dodecylbenzenesulfonic acid, and sodium dodecylpoly(oxyethylene) sulfate or sodium N-cocoyl glycinate; the zwitterionic surfactant used as the modifier may be lauramidopropylamine oxide, cetyl betaine or lauramidopropyl betaine; the nonionic surfactant used as the modifier may be, polyethylene glycol distearate or polyethylene glycol stearate, but is not limited thereto.

In this embodiment, a surface of the filter material is modified through a green process of supercritical fluid technology, so that the filter material may have a specific physical property and be used to purify the cells or the biomolecules. Specifically, a manufacturing method of the filter material may include but may not be limited to the following steps: first, the polymer nonwoven fabric, the modifier, and carbon dioxide gas are added into a container (such as a high-pressure container); second, the container is heated and the pressure of the container is increased to obtain a supercritical carbon dioxide fluid; next, the supercritical carbon dioxide fluid is used to dissolve the modifier, so that the dissolved modifier is fixed on the polymer nonwoven fabric; next, the temperature and the pressure of the container are lowered after the heating reaction is over to recycle the supercritical carbon dioxide fluid, and the filter material is obtained.

In the manufacturing method of the filter material of this embodiment, the modifier may be added in an amount of, for example, 0.1 wt% to 10 wt% based on a total weight of the filter material, but is not limited thereto.

In the manufacturing method of the filter material of this embodiment, the temperature of the heating reaction may be, for example, 60°C to 150°C, the time of the heating reaction may be, for example, 30 minutes to 5 hours, and the pressure of the container may be, for example, 70 bar to 500 bar, but is not limited thereto.

Compared with the filter materials that generally perform surface modification by the chemical solvents, the manufacturing method of the filter material of this embodiment dissolves the modifier by critical carbon dioxide fluid as a solvent, and as a result, there are no chemical solvent residue and no concern about the safety of human health in the filter material of this embodiment.

## Experimental Examples

Hereinafter, the experimental examples are used to explain in detail that the filter materials and the manufacturing methods of the above embodiments may have the effects of good filtration efficiency, good safety, and high stability. However, the following experimental examples are not intended to limit the disclosure.

## [Experimental Example 1] Preparation of Filter Material

First, the polymer nonwoven fabric, the modifier, and the carbon dioxide gas are added into the high-pressure container. Second, the high-pressure container is heated, and the pressure of the high-pressure container is increased to obtain the supercritical carbon dioxide fluid. Next, the supercritical carbon dioxide fluid dissolves the modifier to fix the dissolved modifier on the polymer nonwoven fabric. Next, the temperature and the pressure of the container are lowered after the heating reaction is over to recycle the supercritical carbon dioxide fluid, and the filter materials of Experimental Examples 1 to 12 are obtained. Among them, the material of the polymer nonwoven fabric, the material of the modifier, the amount of the modifier, the temperature of the heating reaction, the pressure of the container, and the time of the heating reaction used in preparation of the filter materials of Examples 1 to 12 are all recorded in Table 1 below.

Table 1

|  | Polymer nonwoven fabric | Modifier | Amount of modifier (wt%) | Temperature (°C) | Pressure (bar) | Time (hour) |
|---|---|---|---|---|---|---|
| Experimental example 1 | PP | Hexadecyl-trimethylammonium chloride | 0.1 | 65 | 80 | 4.5 |
| Experimental example 2 | PP | Hexadecyl-trimethylammonium chloride | 0.5 | 65 | 80 | 4.5 |
| Experimental example 3 | PP | Hexadecyl-trimethylammonium chloride | 1.0 | 65 | 80 | 4.5 |
| Experimental example 4 | PP | Sodium coco-sulfate | 0.1 | 85 | 150 | 3.5 |
| Experimental example 5 | PP | Sodium coco-sulfate | 0.5 | 85 | 150 | 3.5 |
| Experimental example 6 | PP | Sodium coco-sulfate | 1.0 | 85 | 150 | 3.5 |
| Experimental example 7 | PET | Lauramidopropylamine oxide | 0.1 | 130 | 300 | 1.5 |
| Experimental example 8 | PET | Lauramidopropylamine oxide | 0.5 | 130 | 300 | 1.5 |
| Experimental example 9 | PET | Lauramidopropylamine oxide | 1.0 | 130 | 300 | 1.5 |

(continued)

| | Polymer nonwoven fabric | Modifier | Amount of modifier (wt%) | Temperature (°C) | Pressure (bar) | Time (hour) |
|---|---|---|---|---|---|---|
| Experimental example 10 | PBT | Polyethylene glycol distearate | 0.1 | 150 | 400 | 0.5 |
| Experimental example 11 | PBT | Polyethylene glycol distearate | 0.5 | 150 | 400 | 0.5 |
| Experimental example 12 | PBT | Polyethylene glycol distearate | 1.0 | 150 | 400 | 0.5 |

**[Experimental Example 2] Characteristic Analysis of Filter Material and Filtration Effect**

Comparative Examples 1 to 3 and Experimental Examples 1 to 12 of the filter materials are analyzed as follows: pore diameter analysis, fiber diameter analysis, surface electrical property (zeta potential) analysis, critical wetting surface tension analysis, chemical oxygen demand analysis, and cytotoxicity analysis, white blood cell filtration effect analysis, and albumin filtration effect analysis. Among them, Comparative Example 1 is the polypropylene without surface modification, and Comparative Examples 2 and 3 are commercially available filter materials respectively.

<Pore Diameter Analysis>

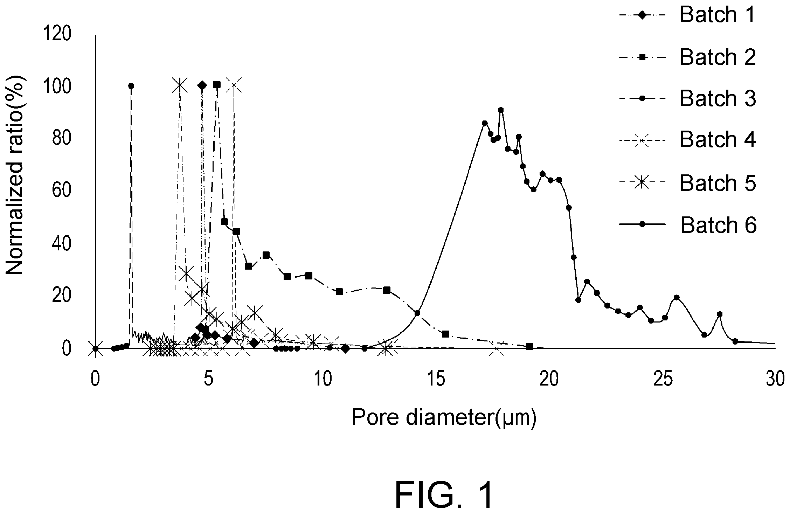

Different batches (batch 1 to batch 6) of the polymer nonwoven fabric (for example, polybutylene terephthalate) are cut into discs with 25 mm and are placed in a pore diameter analyzer (Innova-100N, Poretech Instrument Inc.), galwet (Surface Tension 15.9 dynes/cm) is dropped to wet the surface of the polymer nonwoven fabric, then the surface is slowly pressured with nitrogen, and is measured the changes in pressure and flow rate. Afterwards, the pore diameter and a number proportion of the pore diameter are calculated according to Washburn equation below, and the results are shown in FIG. 1.

$$D=[4\,\gamma\cos\theta]/P,$$

where D is the pore diameter, $\gamma$ is the surface tension of the galwet, $\theta$ is a contact angle, and P is the gas pressure.

According to the results in FIG. 1, a vertical axis is a normalized ratio, and a horizontal axis is the pore diameter. Among them, the normalized ratio is based on the numbers of the pore diameters with the largest proportion as 100%, and the rest are the proportions relative to the numbers. As shown in FIG. 1, the pore diameter of batch 1 is about $5\mu m$, the pore diameter of batch 2 is about $5.5\mu m$, the pore diameter of batch 3 is about $1.5\mu m$, the pore diameter of batch 4 is about $6\mu m$, the pore diameter of batch 5 is about $4\mu m$, and the pore diameter of batch 6 is about $17\mu m$ to $19\mu m$.

<Fiber Diameter Analysis>

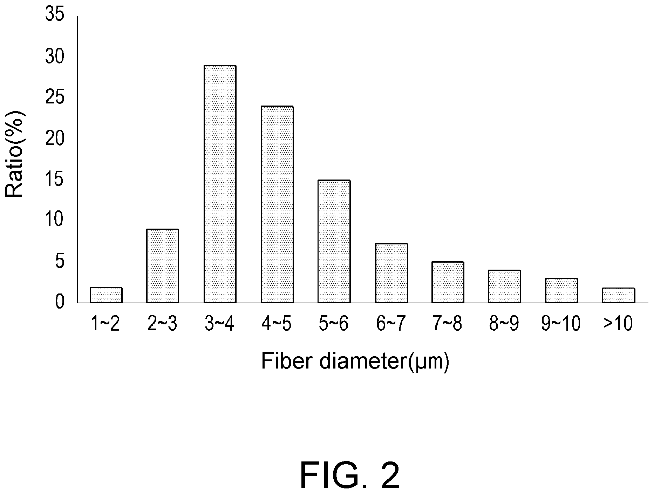

After the surface of the polymer nonwoven fabric (for example, polybutylene terephthalate) is plated with gold (Agar Scientific), the surface of the polymer nonwoven fabric is observed with an electron microscope (JEOL JSM-7600F), and the fiber diameter is measured. Also, the statistical analysis is carried out, and the results are shown in FIG. 2.

According to the results in FIG. 2, among all the measured fibers, about 2% of the fibers have a fiber diameter of $1\mu m$ to $2\mu m$, about 9% of the fibers have a fiber diameter of $2\mu m$ to $3\mu m$, about 29% of the fibers have a fiber diameter of $3\mu m$ to $4\mu m$, about 24% of the fibers have a fiber diameter of $4\mu m$ to $5\mu m$, about 15% of the fibers have a fiber diameter of $5\mu m$ to $6\mu m$, about 7% of the fibers have a fiber diameter of $6\mu m$ to $7\mu m$, about 5% of the fibers have a fiber diameter of $7\mu m$ to $8\mu m$, about 4% of the fibers have a fiber diameter of $8\mu m$ to $9\mu m$, about 3% of the fibers have a fiber diameter of $9\mu m$ to $10\mu m$, and about 2% of the fibers have a fiber diameter of $10\mu m$ or more.

< Surface Electrical Property (Zeta Potential) Analysis>

The surface electrical property (zeta potential) of the filter material is measured by an electrokinetic analyzer (Anton Paar, SURPASS3). Specifically, a mobile phase with 10mM KCl (pH6.0) pushes a slit of the two filter materials at a pressure of 600-200 mbar. A charge at the slit exit, and hysteresis of a positive ion (K) and a negative ion (Cl⁻) are analyzed to measure a surface membrane zeta potential of the filter material, and the results are shown in Table 2.

Table 2

| | Zeta Potential (mV) | Critical wetting surface tension (dyn/cm) | Chemical oxygen demand (ppm) | White blood cell depletion ratio (%) | Albumin depletion ratio (%) | Ratio |
|---|---|---|---|---|---|---|
| Experimental Example 1 | 5 | 80 | 128 | 99.992 | - | - |
| Experimental Example 2 | 28 | 90 | 232 | - | - | - |
| Experimental Example 3 | 45 | 105 | 340 | 99.996 | 18 | 3.6 |
| Experimental Example 4 | -15 | 85 | 112 | - | - | - |
| Experimental Example 5 | -27 | 95 | 184 | - | - | - |
| Experimental Example 6 | -45 | 110 | 308 | 99.991 | 48 | 9.6 |
| Experimental Example 7 | -12 | 85 | 144 | 99.991 | - | - |
| Experimental Example 8 | -11 | 95 | 192 | - | - | - |
| Experimental Example 9 | -8 | 115 | 276 | 99.996 | 21 | 4.2 |
| Experimental Example 10 | -12 | 90 | 88 | 99.991 | - | - |
| Experimental Example 11 | -15 | 105 | 188 | - | - | - |
| Experimental Example 12 | -7 | 115 | 320 | 99.993 | 9 | 1.8 |
| Comparative Example 1 | -10 | 45 | | - | - | - |
| Comparative Example 2 | -10 | 90 | 648 | 99.991 | 5 | 1 |
| Comparative Example 3 | -8 | 85 | 892 | 99.992 | 6 | - |

<Critical Wetting Surface Tension Analysis>

The critical wetting surface tension of the filter material is measured by a sodium hydroxide aqueous solution and a methanol aqueous solution. Specifically, different concentrations of the sodium hydroxide aqueous solutions (or the methanol aqueous solutions) are formulated, and then 10 drops of the defined concentrations of the sodium hydroxide aqueous solutions (or the methanol aqueous solutions) are dropped on the filter material. After 10 minutes, if the filter material has absorbed more than 9 drops of the sodium hydroxide aqueous solutions (or the methanol aqueous solutions), a surface tension value corresponding to the different concentrations of the sodium hydroxide aqueous solutions (or the methanol aqueous solutions) at 25 degrees Celsius is defined as the critical wetting surface tension of the filter material according to Table 3 (or Table 4) below. A surface tension value of water at 25 degrees Celsius is 72 dynes/cm.

Table 3

| Sodium hydroxide aqueous solution (w/w) | Surface tension value (dyn/cm) |
|---|---|
| 0.15 | 80 |
| 0.21 | 85 |
| 0.23 | 90 |
| 0.28 | 95 |
| 0.32 | 100 |
| 0.37 | 105 |
| 0.42 | 110 |
| 0.48 | 115 |

Table 4

| Methanol aqueous solution (w/w) | Surface tension value (dyn/cm) |
|---|---|
| 0 | 72 |
| 5 | 63 |
| 10 | 56 |
| 15 | 51 |
| 20 | 47 |
| 25 | 44 |

According to the results in Table 2, the critical wetting surface tension values of Experimental Examples 1 to 12 are all greater than 72 dynes/cm (that is, the surface tension value of water), which means that Experimental Examples 1 to 12 have hydrophilicity but no hydrophobicity. In addition, the critical wetting surface tension values of Experimental Examples 3, 5, 6, 8, 9, 11, and 12 are all significantly greater than the critical wetting surface tension values of Comparative Examples 1 to 3, which means that Experimental Examples 3, 5, 6, 8, 9, 11, and 12 may have better hydrophilicity and increase a filtration rate.

<Chemical Oxygen Demand Analysis>

5 g of the filter material are immersed in a container containing 100g of pure water. Next, the container is shaken at 100 rpm for 2 hours in an environment of 75°C to dissolve or extract a dissolved substance in the filter material to obtain an extraction solution. Afterwards, the extraction solution is added to a digestion reagent (HACH, 3-150 mg/L), heated to 120°C, and undergone reaction for 2 hours to perform an analysis with a chemical oxygen demand detector (Rocker, CD 200). The results are shown in Table 2, and the dissolved substance may be the solvent or the modifier, but is not limited thereto.

According to the results in Table 2, the CODs of Experimental Examples 1 to 12 are significantly less than the CODs of Comparative Examples 2 to 3, which means that Experimental Examples 1 to 12 may have better safety and less concerns about human health.

<Cytotoxicity Analysis>

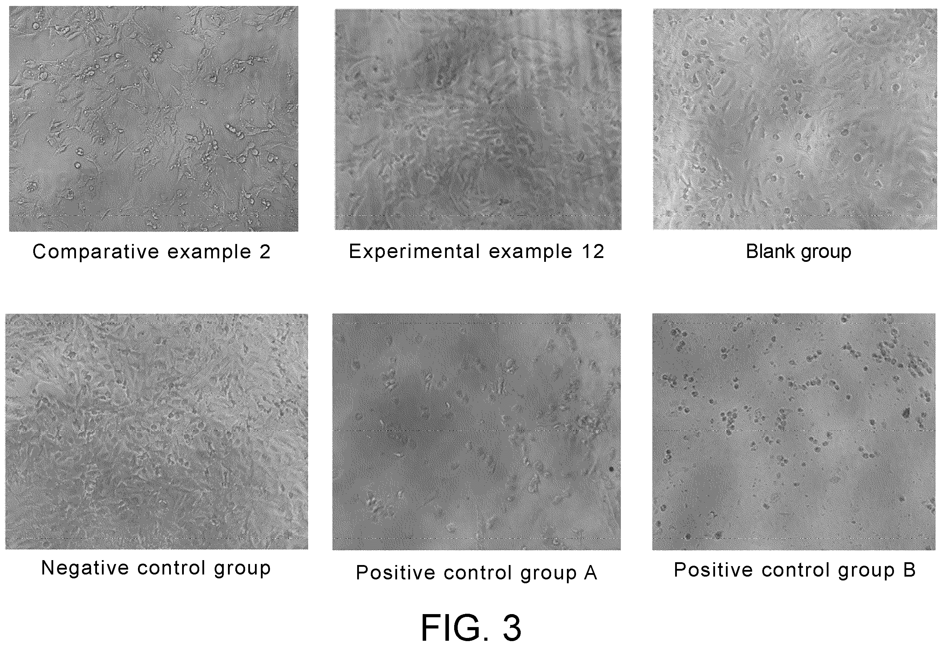

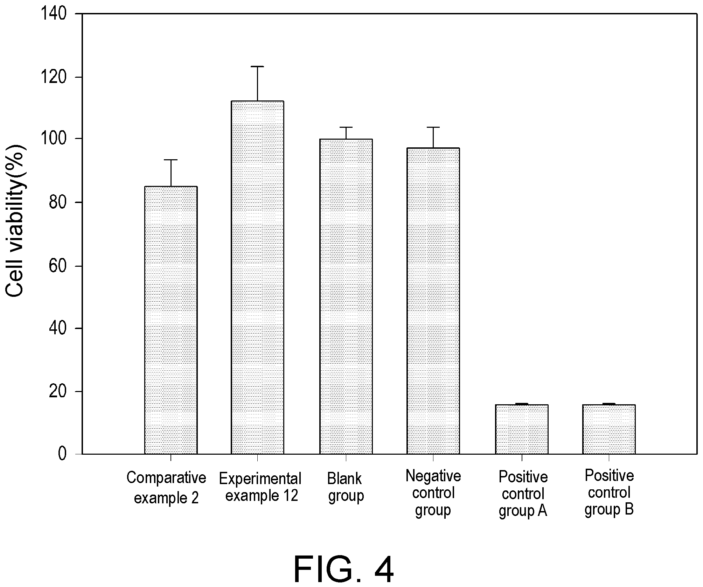

A same number of the cells is added into a cell culture plate. After the cells are attached to the cell culture plate, the cells divided into different groups (Comparative Example 2, Experimental Example 12, a blank group, a negative control group, a positive control group A, and a positive control group B) are add into the cell culture plates corresponding to treatment solutions and undergone reaction for 24 hours. Among them, the treatment solution of Comparative Example 2 is the extraction solution of the filter material of Comparative Example 2 after water extraction, the treatment solution of Experimental Example 12 is the extraction solution of the filter material of Experimental Example 12 after water extraction; no treatment solution is added to the blank group; the treatment solution of the negative control group is water; the treatment solution of the positive control group A is phenol; and the treatment solution of the positive control group B is dimethyl sulfoxide (DMSO). Next, after cell growth (qualitative analysis) is observed with the electron microscope, 3-(4,5-Dimethylthiazol-2-yl)-2,5-Diphenyltetrazolium Bromide (MTT) is added into the cell culture plate to analyze cell viability (quantitative analysis) with the analytic method of MTT, and the results are shown in FIG. 3 and FIG. 4 respectively.

According to the results in FIG 3, the cell morphology of Comparative Example 2, Experimental Example 12, the blank group, and the negative control group are spread out and attached to the cell culture plates, which means that the extraction solution of Comparative Example 2, the extraction solution of Experimental Example 12, and the water of the negative control group do not significantly affect the cell growth and has no significant cytotoxicity. On the contrary, the cell morphology of the positive control group A and the positive control group B show a rounding with shrinkage, which means that the phenol and the dimethyl sulfoxide do significantly affect the cell growth and have significant cytotoxicity.

According to the results in FIG. 4, the cell viability of Experimental Example 12 is similar to the cell viability of the blank group (or the negative control group), which means that Experimental Example 12 may not affect the cell growth and have no cytotoxicity. In addition, since the cell viability of Experimental Example 12 is significantly greater than the cell viability of Comparative Example 2, Experimental Example 2 may have better safety and less concerns about human health.

< White Blood Cell Filtration Effect Analysis >

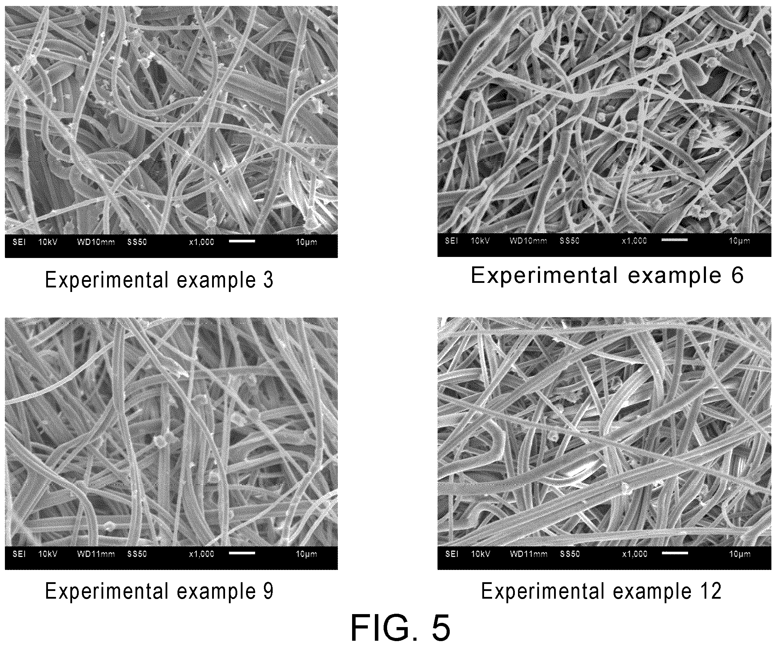

Fresh human blood is collected, and the white blood cell content (cell/$\mu$L) in the blood is analyzed with a hematology analyzer (BECKMAN DxH 500 HEMATOLOGY ANALYZER). Then, several layers of the filter materials with a basis weight of 100g/m$^2$ are combined into a filter to remove the blood by gravity. Next, the filtered filter material is observed with the electron microscope, and the results are shown in FIG. 5. Afterwards, the white blood cell content in the filtered blood is analyzed, a white blood cell depletion ratio (WBCDR) of the filter material is calculated by the formula below, and the results are shown in Table 2.

$$WBCDR = [(C_0-C_1) / C_0] \times 100\%,$$

where $C_0$ is the white blood cell content (cell/$\mu$L) in the blood before filtration, and $C_1$ is the white blood cell content in the blood after filtration (cell/$\mu$L).

According to the results in FIG. 5, the white blood cells may be observed on the filter materials of Experimental Examples 3, 6, 9, and 12 after filtration, which means that the filter materials of Experimental Examples 3, 6, 9, and 12 may indeed be used to remove the cells.

According to the results in Table 2, the WBCDRs of Experimental Examples 1, 3, 6, 7, 9, 10, and 12 are similar to the WBCDRs of Comparative Examples 2 and 3, which means that the surface-modified Experimental Examples 1 and 1, 3, 6, 7, 9, 10, and 12 are used to remove the cells and have good filtration efficiency.

<Albumin Filtration Effect Analysis >

A human albumin solution (Plasbumin®-20, GRIFOLS Inc.) is prepared, different concentrations of the albumin solutions (1000, 500, 250, 125 $\mu$g/mL) with physiological saline are formulated, and the absorbance values of the different concentrations of the albumin solutions are measured by a protein detection reagent (Bio-Rad Protein Assay) to create a graph of a relationship between the absorbance value and the concentration of the albumin solution, and obtain a calibration curve. Next, the filter material is made into the filter (containing 0.3 g of the filter material) to filter 1.5 mL of the albumin solution (600 $\mu$g/mL) by gravity. Next, the protein detection reagent is used to measure the concentration of the filtered albumin solution, an albumin depletion ratio (ADR) of the filter material is calculated by the formula below, and the results are shown in Table 2.

$$ADR = [(C_0-C_1) / C_0] \times 100\%,$$

where $C_0$ is the albumin concentration before filtration ($\mu$g/mL), and $C_1$ is the albumin concentration after filtration ($\mu$g/mL).

Next, if the ADR of the filter material of Comparative Example 1 is used as a standard, the following formula may also be used to calculate a ratio between the ADR of the filter material of the Experimental Example and the ADR of the filter material of Comparative Example 1.

$$Ratio = ADR / ADR_1,$$

where the ADR is the albumin depletion ratio of the filter material of the Experimental Example, and the $ADR_1$ is the albumin depletion ratio of the filter material of Comparative Example 1.

According to the results in Table 2, the ADRs of Experimental Examples 3, 6, 9, and 12 are all significantly greater than the ADRs of Comparative Examples 2 and 3, which means that Experimental Examples 3, 6, 9, and 12 are used to remove the biomolecules and have good filtration efficiency.

<Stability Analysis>

After respectively storing the filter materials of Experimental Example 3 (or Experimental Examples 1, 6, 7, 9, 10, and 12) manufactured in the same batch for different periods, analyses of the white blood cell filtration effect and the albumin filtration effect of the filter materials are conducted. The results indicate that the differences in the white blood cell filtration effects (or the albumin filtration effects) measured among different storage times of the filter materials are small. For example, the difference in the WBCDRs measured among different storage times of the filter materials is less than or equal to 0.01% (i.e., the depletion ratios are all $\geq$ 99.99%), and the difference in the ADRs measured among different storage times of the filter materials is less than or equal to 5%. This suggests that the surface properties of the filter material in Experimental Example 3 (or Experimental Examples 1, 6, 7, 9, 10, and 12) manufactured in the same batch may consistently exhibit stable characteristics over time.

To sum up, in the filter material and the manufacturing method thereof of an embodiment of the disclosure, since there is no chemical solvent residue on the filter material, the solution filtered by the filter material may have no concern about the safety of human health. The manufacturing method of the filter material dissolves the modifier using critical carbon dioxide fluid as the solvent. Consequently, there is no chemical solvent residue, and there are no concerns about the safety of human health in the filter material of this embodiment. In addition, compared with commercially available filter materials (such as Comparative Examples 2 and 3), the filter material of this embodiment performs the surface modification by the surfactant (that is, the cationic surfactant, the anionic surfactant, the zwitterionic surfactant or the nonionic surfactant), so that the filter material of this embodiment has better hydrophilicity and may increase the filtration rate. Moreover, the filter material of this embodiment has better safety, less concerns about human health, and is used to remove the biomolecules with good filtration efficiency.

## Claims

1. A filter material used to remove cells and biomolecules, comprising:

   a polymer nonwoven fabric; and
   a modifier, fixed on the polymer nonwoven fabric,
   wherein a critical wetting surface tension of the filter material is between 45 dynes/cm and 115 dynes/cm, a surface electrical property (zeta potential) of the filter material is between - 50 mV and +50 mV, and there is no chemical solvent residue on the filter material.

2. The filter material according to claim 1, wherein the polymer nonwoven fabric comprises ethylene vinyl acetate, polypropylene, ultra-high molecular weight polyethylene, polyoxymethylene, polybutylene terephthalate, polyethylene terephthalate, polyamide, polycyclohexylenedimethylene terephthalate, polyetheretherketone or combinations thereof.

3. The filter material according to claim 1, wherein the modifier is a cationic surfactant, an anionic surfactant, a zwitterionic surfactant or a nonionic surfactant.

4. The filter material according to claim 1, wherein the modifier has a hydrophobic group and a hydrophilic group connected to each other; the hydrophobic group comprises a single long chain containing carbon number 10 to 18, two long chains containing carbon number 10 to 18, or three long chains containing carbon number 10 to 18; the hydrophilic group comprises a hydrophilic group with a cation, a hydrophilic group with an anion, a hydrophilic group with a zwitterion, or a hydrophilic group without an ion;
   wherein hydrophile-lipophile balance of the modifier is 6 to 18.

5. The filter material according to claim 4, wherein the modifier is hexadecyl-trimethylammonium chloride, sodium coco-sulfate, lauramidopropylamine oxide or polyethylene glycol distearate.

6. The filter material according to claim 1, wherein an average pore diameter of the filter material is between $1\mu m$ and $50\mu m$, and a fiber diameter of the filter material is between $1\mu m$ and $10\mu m$.

7. The filter material according to claim 6, wherein a ratio of the average pore diameter to the fiber diameter of the filter material is between 0.1 and 50.

8. The filter material according to claim 1, used to remove white blood cells, wherein a white blood cell depletion ratio of the filter material is greater than 99.99%.

9. The filter material according to claim 1, used to remove albumins, wherein an albumin depletion ratio of the filter material is greater than or equal to 9%.

10. The filter material according to claim 1, wherein a chemical oxygen demand of an extraction solution of the filter material after water extraction is less than 500 ppm.

11. A manufacturing method of a filter material, wherein the filter material is used to remove cells and biomolecules, and the manufacturing method comprises:

adding a polymer nonwoven fabric, a modifier, and carbon dioxide gas into a container;

performing a heating reaction on the container and increasing a pressure of the container to obtain a supercritical carbon dioxide fluid;

dissolving the modifier in the supercritical carbon dioxide fluid to fix the dissolved modifier on the polymer nonwoven fabric; and

lowering a temperature and the pressure of the container after the heating reaction is over to recycle the supercritical carbon dioxide fluid and obtaining the filter material.

FIG. 1

FIG. 2

Comparative example 2       Experimental example 12       Blank group

Negative control group       Positive control group A       Positive control group B

FIG. 3

FIG. 4

FIG. 5

Europäisches
Patentamt

European
Patent Office

Office européen
des brevets

# EUROPEAN SEARCH REPORT

**Application Number**

EP 25 15 2421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/291227 A1 (DUCOROY LAURENT [FR] ET AL) 2 October 2014 (2014-10-02) | 1-10 | INV.<br>B01D39/16<br>D06M23/10 |
| A | * paragraphs [0002], [0014], [0028], [0030], [0037], [0041] - [0047]; example 1 * | 11 | |
| X | US 2006/207937 A1 (BONAGUIDI PAOLO [IT] ET AL) 21 September 2006 (2006-09-21) | 1-10 | |
| A | * paragraphs [0005], [0009], [0011], [0015], [0017], [0020] - [0022], [0050], [0051]; example 1 * | 11 | |
| X | US 2019/209765 A1 (SHIMADA NOBUKAZU [JP]) 11 July 2019 (2019-07-11) | 1-10 | |
| A | * paragraphs [0015], [0016], [0022] - [0024], [0042], [0054], [0058], [0099], [0100], [0105], [0126], [0129]; example 1 * | 11 | |
| X | US 2023/025277 A1 (HE MEI FENG [CN] ET AL) 26 January 2023 (2023-01-26) | 1-10 | **TECHNICAL FIELDS SEARCHED (IPC)** |
| A | * paragraphs [0002], [0005], [0042] - [0045], [0051] * | 11 | B01D<br>D06Q<br>D06M |
| X | US 2020/237996 A1 (LIANG CHENG-SHENG [TW] ET AL) 30 July 2020 (2020-07-30) | 11 | |
| A | * paragraphs [0002], [0009] - [0012], [0015], [0018], [0019], [0023] - [0026] * | 1-10 | |
| X | WO 2018/048329 A1 (AUTONOMOUS NON PROFIT ORGANIZATION FOR HIGHER EDUCATION SKOLKOVO INSTI) 15 March 2018 (2018-03-15) | 11 | |
| A | * page 1, paragraph 1 *<br>* page 3, paragraph 2 *<br>* page 4, paragraphs 6,7,9 *<br>* page 9, paragraph 9 - page 10, paragraph 1; figure 1; example 1 * | 1-10 | |

-/--

The present search report has been drawn up for all claims

| Place of search | Date of completion of the search | Examiner |
|---|---|---|
| The Hague | 30 July 2025 | Howe, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 25 15 2421

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2007/125700 A1 (DING JIANG [US] ET AL) 7 June 2007 (2007-06-07) * paragraphs [0002], [0012], [0086], [0088], [0089], [0091], [0093], [0098] - [0101]; examples 1-8 * | 1-11 | |
| A | JP 2005 075980 A (TOYO BOSEKI) 24 March 2005 (2005-03-24) * paragraphs [0001], [0029] - [0034]; example 1 * | 1-11 | |

TECHNICAL FIELDS
SEARCHED     (IPC)

The present search report has been drawn up for all claims

| Place of search | Date of completion of the search | Examiner |
|---|---|---|
| The Hague | 30 July 2025 | Howe, Patrick |

EPO FORM 1503 03.82 (P04C01)

Europäisches
Patentamt

European
Patent Office

Office européen
des brevets

**Application Number**

EP 25 15 2421

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the
requirements of unity of invention and relates to several inventions or groups of inventions, namely:

      **1. claims: 1-10**

             **Subject-matter of claim 1**
                        **---**

      **2. claim: 11**

             **Subject-matter of claim 11**
                        **---**

## ANNEX TO THE EUROPEAN SEARCH REPORT
## ON EUROPEAN PATENT APPLICATION NO.

EP 25 15 2421

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | | Publication date | Patent family member(s) | | Publication date |
|---|---|---|---|---|---|
| US 2014291227 | A1 | 02-10-2014 | DK | 2783717 T3 | 15-06-2020 |
| | | | EP | 2783717 A1 | 01-10-2014 |
| | | | ES | 2795675 T3 | 24-11-2020 |
| | | | FR | 3003764 A1 | 03-10-2014 |
| | | | PL | 2783717 T3 | 05-10-2020 |
| | | | US | 2014291227 A1 | 02-10-2014 |
| US 2006207937 | A1 | 21-09-2006 | AT | E505250 T1 | 15-04-2011 |
| | | | CN | 1741839 A | 01-03-2006 |
| | | | EP | 1590065 A1 | 02-11-2005 |
| | | | ES | 2361995 T3 | 27-06-2011 |
| | | | JP | 4394676 B2 | 06-01-2010 |
| | | | JP | 2006518420 A | 10-08-2006 |
| | | | PT | 1590065 E | 26-05-2011 |
| | | | US | 2006207937 A1 | 21-09-2006 |
| | | | WO | 2004064980 A1 | 05-08-2004 |
| US 2019209765 | A1 | 11-07-2019 | AU | 2017311836 A1 | 07-03-2019 |
| | | | BR | 112019003194 A2 | 18-06-2019 |
| | | | CA | 3034065 A1 | 22-02-2018 |
| | | | CN | 109562210 A | 02-04-2019 |
| | | | EP | 3501561 A1 | 26-06-2019 |
| | | | ES | 2845176 T3 | 26-07-2021 |
| | | | JP | 6752890 B2 | 09-09-2020 |
| | | | JP | WO2018034213 A1 | 18-04-2019 |
| | | | KR | 20190026842 A | 13-03-2019 |
| | | | RU | 2711368 C1 | 16-01-2020 |
| | | | US | 2019209765 A1 | 11-07-2019 |
| | | | WO | 2018034213 A1 | 22-02-2018 |
| US 2023025277 | A1 | 26-01-2023 | CN | 117836335 A | 05-04-2024 |
| | | | TW | 202311299 A | 16-03-2023 |
| | | | US | 2023025277 A1 | 26-01-2023 |
| | | | WO | 2023272452 A1 | 05-01-2023 |
| US 2020237996 | A1 | 30-07-2020 | CN | 111481993 A | 04-08-2020 |
| | | | EP | 3685901 A1 | 29-07-2020 |
| | | | JP | 7232748 B2 | 03-03-2023 |
| | | | JP | 2020116379 A | 06-08-2020 |
| | | | KR | 20200094072 A | 06-08-2020 |
| | | | TW | 202027839 A | 01-08-2020 |
| | | | US | 2020237996 A1 | 30-07-2020 |
| WO 2018048329 | A1 | 15-03-2018 | RU | 2642775 C1 | 25-01-2018 |
| | | | WO | 2018048329 A1 | 15-03-2018 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 15 2421

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | Publication date | Patent family member(s) | | Publication date |
|---|---|---|---|---|
| US 2007125700 A1 | 07-06-2007 | NONE | | |
| JP 2005075980 A | 24-03-2005 | JP | 4289089 B2 | 01-07-2009 |
| | | JP | 2005075980 A | 24-03-2005 |

For more details about this annex : see Official Journal of the European Patent Office, No. 12/82

page 2 of 2